(19)

Europäisches
Patentamt
European
Patent Office
Office européen
des brevets

(11) **EP 4 691 595 A1**

(12) **EUROPEAN PATENT APPLICATION**
published in accordance with Art. 153(4) EPC

(43) Date of publication:
**11.02.2026 Bulletin 2026/07**

(21) Application number: **24778527.2**

(22) Date of filing: **10.01.2024**

(51) International Patent Classification (IPC):
**B01D 39/16** (2006.01)        **D01F 6/04** (2006.01)
**D04H 1/728** (2012.01)        **D04H 5/00** (2012.01)

(52) Cooperative Patent Classification (CPC):
**B01D 39/16; D01F 6/04; D04H 1/728; D04H 5/00**

(86) International application number:
**PCT/JP2024/000288**

(87) International publication number:
**WO 2024/202381 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2023 JP 2023048719**

(71) Applicants:
• **JNC Corporation**
**Chiyoda-ku**
**Tokyo 100-8105 (JP)**

• **JNC FILTER CO., LTD.**
**Osaka-shi**
**Osaka 530-6108 (JP)**

(72) Inventors:
• **MINEO, Ryota**
**Moriyama-shi, Shiga 524-0001 (JP)**
• **SASAKI, Keita**
**Moriyama-shi, Shiga 524-0001 (JP)**
• **NAKAMURA, Yoshihiro**
**Moriyama-shi, Shiga 524-0001 (JP)**

(74) Representative: **Becker Kurig & Partner**
**Patentanwälte mbB**
**Bavariastraße 7**
**80336 München (DE)**

(54) **DEPTH FILTER**

(57)    Provided is a depth filter which has the absolute property of filtration and the removing performance of gel even for particles to be removed having a reduced particle diameter, and is excellent in liquid permeability. This depth filter comprises an outer layer, a pre-filtration layer, and a precision filtration layer arranged in this order with respect to the filtration direction. The outer layer is formed by winding an outer layer nonwoven fabric containing a high-melting-point resin and a low-melting-point resin multiply, the nonwoven fabrics to be wound are thermally bonded by the low-melting-point resin, and the average fiber diameter is continuously reduced with respect to the filtration direction. The precision filtration layer is a layer in which a nonwoven fabric for the precision filtration layer having an average fiber diameter of less than 300 nm is wound multiply. The pre-filtration layer is a layer in which a nonwoven fabric for the precision filtration layer having an average fiber diameter of 300 nm or more, a nonwoven fabric for a pre-filtration layer having an average fiber diameter of less than 1000 nm is wound multiply, and an average fiber diameter is constant or gradually decreases with respect to the filtration direction.

EP 4 691 595 A1

## Description

Technical Field

The present invention relates to a depth filter for filtering a fluid including fine particles.

Background Technology

In recent years, as various electronic devices have needs for higher performance and miniaturization, the built-in electronic components have been required to have lower profiles, and each constituent member tends to become thinner and more multilayered. In regard to the thinness of members, the presence of foreign matter with large particle diameters impairs the uniformity in thickness and makes it difficult to manufacture high-definition devices, and also directly leads to manufacturing troubles. Therefore, in processes before processing and molding, coarse particles contained in slurries are removed by depth filters. As members tend to become even thinner in the future, and the particle diameter considered as coarse particles is becoming smaller to submicron size, there is an increasing demand for high-precision depth filters having high capture performance for such particles. Moreover, in recent years, it has been suggested that gels present in slurries may lead to defects during electronic device manufacturing, and performance to capture gels is also required.

Depth filters used in such fields have a thick filter medium, and ensure filtration precision and liquid permeability for fine particle-containing liquids having a relatively wide particle size distribution by changing fiber diameter from large to small or changing basis weight from upstream to downstream side. Patent Document 1 discloses a depth filter in which a pre-filtration layer configured with a fiber diameter that gradually becomes finer in the filtration direction, and a precision filtration layer having a smaller fiber diameter than the pre-filtration layer are joined. Such a depth filter has been intended to achieve high-precision filtration while relatively suppressing an increase in filtration pressure by capturing coarse particles on the outside and capturing particles and gels finer than coarse particles on the inside. However, there is a problem that such a depth filter cannot respond to recent needs where the particle diameter of the particles to be removed is small and strict, because the fiber diameter of fibers constituting the precision filtration layer is not sufficiently fine.

On the other hand, Patent Document 2 discloses a depth filter including a pre-filtration layer and a precision filtration layer using ultrafine fibers. Attempts have been made to capture fine particles by thickening the nonwoven fabric layer composed of such ultrafine fibers, but on the other hand, liquid permeability decreases and there is a tendency to cause a high pressure state.

Therefore, when the filtration amount of the filter increases and a high filtration pressure is reached, a push-out phenomenon tends to occur in which the captured particles and gels leak out to the downstream side as if pushing through fiber gaps, resulting in deterioration of filtration precision. What is more, since the filtration operation requires attention, there is a problem that filtration process management becomes complicated for the operator. In addition, the pressure applied to the filter can be reduced by lowering the liquid flow rate, but in that case, there is a problem of poor productivity. Furthermore, in the case of filtering at a constant pressure, filters with higher pressure loss have inferior fluid processing capacity, so filters with lower pressure loss are preferable from the viewpoint of productivity.

On the other hand, high-precision filters using ultrafine fibers tend to have low water permeability. When passing aqueous dispersion including fine particles through such high-precision depth filters, filtration is performed by wetting the filter medium while removing air contained in the filter medium through pressure wetting. However, since many ultrafine fibers are hydrophobic, the filter medium is difficult to wet, and preparation for filtration requires efforts such as requiring high pressure or time for water passage, which is complicated for the operator. Therefore, handling properties that enable smooth water passage are desired for high-precision filters.

Moreover, a filter medium of nonwoven fabric composed of melt blow ultrafine fibers does not employ surface filtration with high filtration absoluteness like precision membranes with uniform pore diameter, but employs a depth filtration mechanism that captures fine particles by the thickness of the filter medium. Furthermore, fine particles not captured in the filter medium gaps flow to the downstream side while colliding with the filter medium, but there are variations in the time of leakage. In recent years, the polishing process in semiconductor manufacturing processes requires strictness in management of coarse particles, and it is preferable that filter replacement can be predicted in advance. Under such current circumstances, depth filters are also required to have filtration absoluteness, and ease of process management in the filtration operation such as ease of liquid passage and stability of capture performance under high pressure.

Thus, there is a demand for a depth filter that enables high-precision filtration even for particles to be removed that have a reduced particle diameter (having filtration absoluteness), has gel removal performance, and excels in liquid permeability.

Related Art Documents

Patent Documents

Patent Document 1: International Publication No. 1998/013123
Patent Document 2: Japanese Patent Application Laid-Open No. 2017-185422

SUMMARY OF INVENTION

Problem to be Solved by the Invention

In view of this situation, the present invention provides a depth filter that has filtration absoluteness and gel removal performance even for particles to be removed that have a reduced particle diameter, and excels in liquid permeability.

Means for Solving the Problem

That is, the present invention has the following configurations.

[1] A depth filter, including an outer layer, a pre-filtration layer, and a precision filtration layer arranged in this order with respect to a filtration direction, in which

the outer layer is a layer in which an outer layer nonwoven fabric including a high-melting-point resin and a low-melting-point resin is wound in multiple layers, and wound nonwoven fabrics are thermally bonded by the low-melting-point resin, and which is configured so that an average fiber diameter continuously decreases with respect to the filtration direction,
the precision filtration layer is a layer in which a precision filtration layer nonwoven fabric is wound in multiple layers, and an average fiber diameter of fibers constituting the precision filtration layer nonwoven fabric is less than 300 nm, and
the pre-filtration layer is a layer in which a pre-filtration layer nonwoven fabric is wound in multiple layers and which is configured so that an average fiber diameter is constant or decreases stepwise with respect to the filtration direction, and an average fiber diameter of fibers constituting the pre-filtration layer nonwoven fabric is 300 nm or more and less than 1000 nm.

[2] The depth filter according to [1], in which the outer layer is a layer configured so that an average basis weight of the outer layer nonwoven fabric continuously decreases with respect to the filtration direction.
[3] The depth filter according to [1] or [2], in which an average fiber diameter on a most upstream side of the outer layer is 5 $\mu$m to 50 $\mu$m, and an average fiber diameter ratio between the most upstream side and a most downstream side is 5 or more.
[4] The depth filter according to any one of [1] to [3], in which the pre-filtration layer includes polypropylene having a melt flow rate of 500 g/10 min or more and a melting point of 160°C or more.
[5] The depth filter according to [4], in which the polypropylene is polypropylene polymerized by a metallocene catalyst.
[6] The depth filter according to any one of [1] to [5], in which fibers constituting the precision filtration layer nonwoven fabric are polyamide resin.
[7] The depth filter according to any one of [1] to [6], in which the precision filtration layer is a layer in which a laminate of at least one base material and the precision filtration layer nonwoven fabric is wound in multiple layers.
[8] The depth filter according to [7], in which fibers constituting the base material and the precision filtration layer nonwoven fabric are polyamide resin.

Effects of the Invention

It is possible to provide a depth filter that has filtration absoluteness and gel removal performance even for submicron-sized particles to be removed, and excels in liquid permeability.

DESCRIPTION OF THE EMBODIMENTS

A depth filter of the present invention includes an outer layer, a pre-filtration layer, and a precision filtration layer arranged in this order with respect to the filtration direction. Additionally, the depth filter may include a support layer on the downstream side of the precision filtration layer.

(Outer Layer)

The outer layer in the present invention is a layer positioned on the most upstream side with respect to the filtration direction of the depth filter. The outer layer is a layer whose main purpose is to prevent aggregates and impurities with large particle diameters from entering the pre-filtration layer and the precision filtration layer, as well as protect the pre-filtration layer composed of fibers finer than conventional ones and maintain the filter shape when a high pressure is applied. The outer layer is a layer in which an outer layer nonwoven fabric including a high-melting-point resin and a low-melting-point resin is wound in multiple layers, and the wound nonwoven fabrics are thermally bonded by the low-melting-point resin, and which is configured so that the average fiber diameter continuously decreases with respect to the filtration direction.

Since the outer layer in the present invention includes a high-melting-point resin and a low-melting-point resin, even in the case of performing heat treatment using heating rolls or the like for the purpose of enhancing the pressure resistance performance of the depth filter, the entire nonwoven fabric is less likely to become film-like, and reduction in water permeability can be suppressed. Examples of such an outer layer include nonwoven fabric composed of bicomponent fibers (composite fibers) composed of a high-melting-point resin and a low-melting-point resin, mixed fiber nonwoven fabric of single component fibers (high-melting-point fibers) composed of a high-melting-point resin and single component fibers (low-melting-point fibers) composed of a low-melting-point resin, and mixed fiber nonwoven fabric of high-melting-point fibers and/or low-melting-point fibers with composite fibers. However, from the viewpoint of manufacturing ease, mixed fiber nonwoven fabric of high-melting-point fibers and low-melting-point fibers is preferable. Additionally, in the case of using composite fibers, the cross-sectional form thereof is not particularly limited, and examples include concentric sheath-core type, eccentric sheath-core type, side-by-side type, sea-island type, and radial type composite forms.

The high-melting-point resin or low-melting-point resin is not particularly limited, and general thermoplastic resins can be used. Examples include polyamide, polyester, low-melting-point copolymerized polyester, polystyrene, polyurethane elastomer, polyester elastomer, high density polyethylene, low density polyethylene, linear low density polyethylene, polypropylene, and copolymerized polypropylene (for example, binary or ternary copolymers with propylene as the main component and ethylene, butene-1, 4-methylpentene-1, etc.). The combination of high-melting-point resin and low-melting-point resin is not particularly limited, and examples include polypropylene/polyethylene, polypropylene/copolymerized polypropylene, polyester/low-melting-point copolymerized polyester, and polyester/polyethylene. Among these, from the viewpoint of achieving strong bonding force between fibers through heat treatment and obtaining a high-strength outer layer, combinations of polypropylene/copolymerized polypropylene, polypropylene/low density polyethylene, and polypropylene/linear low density polyethylene are preferable, with polypropylene/copolymerized polypropylene being more preferable. Particularly, in the case of the combination of high-melting-point resin and low-melting-point resin being polypropylene/copolymerized polypropylene, not only the bonding force between low-melting-point resins but also the bonding force between high-melting-point resin and low-melting-point resin can be improved.

The melting point difference between the high-melting-point resin and the low-melting-point resin in the outer layer nonwoven fabric is not particularly limited, but is preferably 10°C or more, more preferably 15°C or more, and even more preferably 30°C or more. In the case of the melting point difference being 10°C or more, the temperature range for softening or melting only the low-melting-point resin becomes wider during heat treatment in depth filter molding, making it possible to manufacture the depth filter of the present invention stably under a wide range of conditions.

The content rate of low-melting-point resin in the outer layer nonwoven fabric is not particularly limited, but is preferably 10% by weight to 90% by weight, more preferably 20% by weight to 70% by weight, and even more preferably 30% by weight to 50% by weight. In the case of the content rate of low-melting-point resin being 10% by weight or more, an outer layer with little fuzz and sufficient strength can be formed, and in the case of 90% by weight or less, the low-melting-point resin becomes less likely to block inter-fiber voids by heat treatment or the like, and a depth filter excellent in pressure resistance and liquid permeability can be obtained.

Since the outer layer in the present invention is configured so that the average fiber diameter continuously decreases with respect to the filtration direction, efficient filtration can be achieved throughout the entire thickness even for slurries having a wide particle size distribution or high-concentration/high-viscosity slurries. Additionally, since the outer layer is configured so that the average fiber diameter continuously decreases with respect to the filtration direction, the average fiber diameter on the most upstream side in the filtration direction of the outer layer becomes the maximum average fiber diameter, and the average fiber diameter on the most downstream side in the filtration direction becomes the minimum fiber diameter. Such an outer layer can be obtained by winding an outer layer nonwoven fabric in which the fiber diameter continuously changes.

The average fiber diameter on the most upstream side of the outer layer in the present invention is not particularly limited, but is preferably 5 μm to 50 μm, more preferably 6 μm to 30 μm, and even more preferably 7 μm to 20 μm. In the

case of the average fiber diameter on the most upstream side being 5 μm or more, pressure resistance performance is excellent, and in the case of 50 μm or less, the filtration performance for aggregates and impurities with large particle diameters can be improved. Additionally, the average fiber diameter on the most downstream side of the outer layer is not particularly limited, but is preferably 0.3 μm to 5 μm, more preferably 0.5 μm to 3 μm, and even more preferably 0.7 μm to 2 μm. In the case of the average fiber diameter on the most downstream side of the outer layer being 0.3 μm or more, pressure loss is less likely to become excessive relative to filtration precision, and in the case of 5 μm or less, coarse particles can be prevented from entering the pre-filtration layer and the precision filtration layer.

The average fiber diameter ratio between the most upstream side and the most downstream side of the outer layer in the present invention is not particularly limited, but is preferably 5 or more, more preferably 10 or more, and even more preferably 15 or more. In the case of the average fiber diameter ratio between the most upstream side and the most downstream side being 5 times or more, the balance between pressure resistance performance and capture performance of coarse particles is excellent. On the other hand, the upper limit value of the average fiber diameter ratio between the most upstream side and the most downstream side is not particularly limited, but is practically 50 times or less in order to satisfy the configuration of continuously changing the average fiber diameter.

The outer layer in the present invention is not particularly limited, but is preferably wound so that the average basis weight of the outer layer nonwoven fabric continuously decreases with respect to the filtration direction. By continuously decreasing the average basis weight in this manner, pressure loss is less likely to occur, the slurry flows smoothly, and furthermore, particles to be removed can be efficiently filtered in the thickness direction. Moreover, due to the reduced filtration pressure, push-out is less likely to occur, and as a result, high filtration precision can be easily maintained for a long time. In the case of the outer layer being configured so that the average basis weight continuously decreases with respect to the filtration direction, the average basis weight on the most upstream side in the filtration direction of the outer layer becomes the maximum average basis weight, and the average basis weight on the most downstream side in the filtration direction becomes the minimum average basis weight. The maximum average basis weight of the outer layer in the present invention is not particularly limited, but is preferably 10 g/m$^2$ to 100 g/m$^2$, more preferably 20 g/m$^2$ to 80 g/m$^2$, and even more preferably 30 g/m$^2$ to 60 g/m$^2$. In the case of the maximum average basis weight of the outer layer nonwoven fabric being 10 g/m$^2$ or more, sufficient rigidity can be imparted to the outer layer, and in the case of 100 g/m$^2$ or less, sufficient heating to the inside of the outer layer nonwoven fabric becomes possible during heat treatment, and it becomes possible to bond the wound outer layer nonwoven fabrics to each other by gentle heating or pressurization. Moreover, the minimum average basis weight of the outer layer nonwoven fabric is not particularly limited, but is preferably 1 g/m$^2$ to 40 g/m$^2$, more preferably 3 g/m$^2$ to 30 g/m$^2$, and even more preferably 5 g/m$^2$ to 20 g/m$^2$. In the case of the minimum average basis weight of the outer layer being 1 g/m$^2$ or more, required tension can be applied in the subsequent winding process, and in the case of 40 g/m$^2$ or less, fly or the like is less likely to occur in the manufacturing processes, and the uniformity of the outer layer nonwoven fabric can be improved.

The ratio between the maximum average basis weight and the minimum average basis weight in the outer layer nonwoven fabric is not particularly limited, but is preferably 1.2 times or more, more preferably 1.5 times or more, even more preferably 1.8 times or more, and particularly preferably 2.0 times or more. By setting the ratio between the maximum average basis weight and the minimum average basis weight within the above-mentioned range, the effects of the present invention can be easily obtained.

Since the outer layer in the present invention has the wound nonwoven fabrics thermally bonded by the low-melting-point resin, collapse (compaction) due to an increase in filtration pressure is less likely to occur, and water permeability can be maintained. Additionally, even in the case of the number of captured particles increasing over time, filtration can be performed under mild conditions for a relatively long time, and push-out can be suppressed. In the present invention, "the nonwoven fabrics are bonded" means a state in which the nonwoven fabrics are fixed to such an extent that the nonwoven fabrics do not collapse according to winding when the depth filter is disassembled.

The outer layer nonwoven fabric is not particularly limited, but can be manufactured by a melt blow method. The melt blow method is a method of obtaining an ultrafine fiber web by spraying molten thermoplastic resin extruded from spinning holes in the machine direction or length direction onto a collection conveyor net or a rotating core material (hollow core rod) with high-temperature high-speed gas blown from around the spinning holes. At this time, the average fiber diameter or average basis weight can be continuously changed by continuously changing the amount of resin discharged from the spinning holes (discharge rate), spinning conditions such as the jet speed of the blowing airflow (or hot air pressure), or the conveying speed of the collection conveyor net. The blowing airflow used in the melt blow method is usually air and inert gas such as nitrogen gas. The temperature of the gas used is generally in the range of 200°C to 500°C, and the pressure used is generally in the range of 0.1 kgf/cm$^2$ to 6.5 kgf/cm$^2$.

In the process of manufacturing the outer layer nonwoven fabric, the fibers can be gradually made finer and the average basis weight can be gradually reduced by gradually reducing the discharge rate of the high-melting-point resin and the low-melting-point resin and gradually increasing the hot air pressure. Additionally, the ratio between the maximum average fiber diameter and the minimum average fiber diameter in the outer layer and the ratio of the average basis weight can be increased by simultaneously adjusting the discharge rate and the hot air pressure. Furthermore, the content rate of low-melting-point fibers in the outer layer nonwoven fabric can be changed by changing the number of spinning holes allocated to the low-melting-point resin and the high-melting-point resin, and by changing the extrusion amount of each resin. An outer layer nonwoven fabric in which fibers with different average fiber diameters are mixed may also be obtained by spinning each resin at different discharge rates per spinning hole.

(Pre-filtration Layer)

The pre-filtration layer in the present invention is a layer positioned between the outer layer and the precision filtration layer with respect to the filtration direction, and is a layer whose main purpose is to capture fine particles that could not be captured by the outer layer. By capturing fine particles to a certain extent in the pre-filtration layer, the filtration load on the precision filtration layer can be reduced. The pre-filtration layer is a layer in which a pre-filtration layer nonwoven fabric having an average fiber diameter of 300 nm or more and less than 1000 nm is wound in multiple layers, and which is configured so that the average fiber diameter is constant or decreases stepwise with respect to the filtration direction, and is a layer configured so that the average fiber diameter decreases continuously.

The pre-filtration layer nonwoven fabric in the present invention is characterized by having an average fiber diameter of 300 nm or more and less than 1000 nm. It has been found that by using a pre-filtration layer having a smaller average fiber diameter than conventional ones in the depth filter of the present invention, the filtration absoluteness, gel removal performance, liquid permeability, and stability of capture performance under high pressure can be significantly improved. In the case of the average fiber diameter being 300 nm or more, sufficient liquid permeability can be maintained, and in the case of less than 1000 nm, submicron-sized particles can be captured to a certain extent in the pre-filtration layer, so that the filtration absoluteness, gel removal performance, and stability of capture performance under high pressure can be obtained. From this viewpoint, the average fiber diameter for the pre-filtration layer is preferably 300 nm or more and less than 800 nm, and more preferably 300 nm or more and less than 700 nm.

The pre-filtration layer in the present invention is a layer in which a pre-filtration layer nonwoven fabric is wound in multiple layers and which is configured so that the average fiber diameter is constant or decreases stepwise with respect to the filtration direction. The state in which the average fiber diameter decreases stepwise with respect to the filtration direction is distinguished from the state in which the average fiber diameter decreases continuously with respect to the filtration direction, like the outer layer. Specifically, a pre-filtration layer can be exemplified which is formed by winding in multiple layers a pre-filtration layer nonwoven fabric having an average fiber diameter of 700 nm or more and less than 1000 nm, and winding in multiple layers on the downstream side thereof a pre-filtration layer nonwoven fabric having an average fiber diameter of 300 nm or more and less than 700 nm.

The pre-filtration layer nonwoven fabric is not particularly limited, but may be composed of a single component or may be composed of multiple components (composite fibers, mixed fibers, etc.), and the thermoplastic resins exemplified for the outer layer nonwoven fabric, combinations thereof, etc. can be used.

The pre-filtration layer nonwoven fabric is not particularly limited, but preferably includes polypropylene having a melt flow rate of 500 g/10 min or more and a melting point of 160°C or more. By including such polypropylene, excellent heat resistance and solvent resistance are obtained, and a nonwoven fabric having an average fiber diameter of 300 nm or more and less than 1000 nm can be easily obtained. From this viewpoint, it is more preferable that the melt flow rate is 600 g/10 min or more and the polypropylene has a melting point of 160°C or more. In addition, the polypropylene is preferably polypropylene polymerized from a metallocene catalyst because the molecular weight distribution is narrow, and therefore the variations in average fiber diameter are small, the spinnability is good, and the processability is excellent. Furthermore, in the case of the pre-filtration layer nonwoven fabric being composed of a high-melting-point resin and a low-melting-point resin, by using polypropylene having a melt flow rate of 500 g/10 min or more and a melting point of 160°C or more as the high-melting-point resin, and copolymerized polypropylene having a melting point of 150°C or less as the low-melting-point resin, it is also possible to improve the strength of the pre-filtration layer by fusion bonding of the copolymerized polypropylene during molding of the depth filter.

The pre-filtration layer nonwoven fabric is not particularly limited, but may be a laminate of multiple filtration layer nonwoven fabrics having different fiber diameters, components, etc. For example, a first pre-filtration layer nonwoven fabric having an average fiber diameter of 700 nm or more and less than 1000 nm and a second pre-filtration layer nonwoven fabric having an average fiber diameter of 300 nm or more and less than 700 nm may be laminated to form a pre-filtration layer wound in multiple layers. In addition, a mixed fiber nonwoven fabric of polypropylene/copolymerized polypropylene having an average fiber diameter of 700 nm or more and less than 1000 nm (first pre-filtration layer nonwoven fabric) and a single component nonwoven fabric composed of polypropylene having an average fiber diameter of 300 nm or more and less than 700 nm (second pre-filtration layer nonwoven fabric) may be laminated to form a pre-filtration layer wound in multiple layers. Furthermore, multiple first pre-filtration layer nonwoven fabrics and multiple second pre-filtration layer nonwoven fabrics may be laminated in multiple layers to form a pre-filtration layer wound in multiple layers. In the case of laminating in multiple layers, the first pre-filtration layer nonwoven fabric and the second pre-filtration layer nonwoven fabric may be alternately laminated. The number of laminated layers is not particularly limited, and any number of layers may be stacked as long as it does not interfere with the molding of the depth filter, but in the range of 1 layer to 10 layers, the balance between the function of the pre-filtration layer and workability during manufacturing is excellent.

The pre-filtration layer is not particularly limited, but may or may not be bonded between the wound nonwoven fabrics. Nevertheless, it is preferable to bond between the wound nonwoven fabrics. For example, by using a pre-filtration layer nonwoven fabric including a high-melting-point resin and a low-melting-point resin, and winding under constant pressure while heating to a temperature above the melting point of the low-melting-point resin and below the melting point of the high-melting-point resin, the nonwoven fabrics being wound can be bonded together by the low-melting-point resin, and a depth filter with excellent pressure resistance performance can be obtained. On the other hand, by using a single component pre-filtration layer nonwoven fabric, and winding under temperature and pressure conditions that do not cause complete melting but cause slight softening, the wound nonwoven fabrics can be fixed to an extent that the nonwoven fabrics do not easily separate due to anchor effects, and a depth filter having excellent water permeability can be obtained. The state of being fixed to an extent that does not easily separate due to anchor effect is also included in the state of being bonded between the wound nonwoven fabrics.

The pre-filtration layer is not particularly limited, but a laminate of a base sheet other than the pre-filtration layer nonwoven fabric and the pre-filtration layer nonwoven fabric may be wound in multiple layers. Examples of the base sheet other than the pre-filtration layer nonwoven fabric include nonwoven fabrics having an average fiber diameter of 1 $\mu$m to 1000 $\mu$m (spunbond nonwoven fabric, melt blow nonwoven fabric, through-air nonwoven fabric, airlaid nonwoven fabric, spunlace nonwoven fabric, wet-laid nonwoven fabric, etc.), woven and knitted fabrics, nets, and the like. The base sheet other than the pre-filtration layer nonwoven fabric can be composed of the thermoplastic resins exemplified for the outer layer nonwoven fabric. Such a pre-filtration layer can be formed simultaneously with the outer layer by, for example, using a nonwoven fabric in which the outer layer nonwoven fabric (region where the average fiber diameter changes continuously) and the base sheet (region where the average fiber diameter is constant) are connected, and inserting the pre-filtration layer nonwoven fabric onto the base sheet region while winding the nonwoven fabric around a core material or the like.

The pre-filtration layer nonwoven fabric is not particularly limited, but can be manufactured by the melt blow method described above. However, unlike the manufacturing method for the outer layer nonwoven fabric, the pre-filtration layer nonwoven fabric can be manufactured under constant conditions or stepwise condition changes without gradually changing the discharge rate or hot air pressure.

(Precision Filtration Layer)

The precision filtration layer in the present invention is a layer positioned on the downstream side of the above-described pre-filtration layer with respect to the filtration direction, and is a layer whose main purpose is to capture fine particles and gels that could not be captured by the pre-filtration layer. The precision filtration layer is a layer in which the pre-filtration layer nonwoven fabric having an average fiber diameter of less than 300 nm is wound in multiple layers.

The precision filtration layer nonwoven fabric in the present invention is characterized by having an average fiber diameter of less than 300 nm. In the case of the average fiber diameter of the precision filtration layer nonwoven fabric being less than 300 nm, fine particles and gels can be captured with an excellent balance between collection efficiency and liquid flow resistance, and from this viewpoint, the average fiber diameter is preferably 250 nm or less, and more preferably 200 nm or less. In addition, the lower limit of the average fiber diameter of the precision filtration layer nonwoven fabric is not particularly limited, but considering practical strength, productivity, and the like, the average fiber diameter is preferably 50 nm or more, and more preferably 100 nm or more.

The CV value of the fiber diameter of the fibers constituting the precision filtration layer nonwoven fabric is not particularly limited, but is preferably 0.3 or less, and more preferably 0.2 or less. In the case of the CV value of the fiber diameter being 0.3 or less, the average pore diameter of the precision filtration layer nonwoven fabric becomes small, which can improve the capture performance for fine particles and gels. Furthermore, the lower limit of the CV value of the fiber diameter is not particularly limited, but is practically 0.01 or more.

The resin constituting the pre-filtration layer in the present invention is not particularly limited, but examples include polyamide resins such as nylon 4, nylon 6, nylon 11, nylon 12, nylon 66, nylon 610, polyparaphenyleneterephthalamide, polymetaxylyleneadipamide, and polyhexamethyleneterephthalamide; fluorine resins such as polyvinylidene fluoride and polyvinylidene fluoride-hexafluoropropylene copolymer; acrylic resins such as polyacrylonitrile, polyacrylonitrile-methacrylate copolymer, and polymethyl methacrylate; polyolefin resins such as polyethylene and polypropylene; polyester resins such as polylactic acid and polyethylene terephthalate; polyimide, polyvinyl alcohol, polyethylene oxide, polyethyleneimine, polysulfone, polyethersulfone, cellulose derivatives, and mixtures thereof. Among these, from the viewpoint of water permeability and chemical resistance, the resin is preferably composed of polyamide resins, and more preferably nylon 6 or nylon 6,6.

The basis weight of the precision filtration layer nonwoven fabric is not particularly limited, but is preferably 0.1 g/m$^2$ to 15 g/m$^2$, more preferably 0.1 g/m$^2$ to 10 g/m$^2$, even more preferably 0.1 g/m$^2$ to 5.0 g/m$^2$, particularly preferably 0.2

$g/m^2$ to 4.0 $g/m^2$, and most preferably 0.5 $g/m^2$ to 3.0 $g/m^2$. In the case of the basis weight of the precision filtration layer nonwoven fabric being 0.1 $g/m^2$ or more, the capture performance for fine particles and gels can be improved, and in the case of 15.0 $g/m^2$ or less, the filtration pressure does not become excessively high, and compaction and push-out are less likely to occur.

The precision filtration layer is not particularly limited, but a laminate (precision filtration layer laminate) of at least one base material and a precision filtration layer nonwoven fabric may be wound in multiple layers. The precision filtration layer nonwoven fabric has low strength and rigidity by itself, and there is a risk of wrinkling or breakage due to tension during molding into a depth filter. Nevertheless, lamination with a base material makes it easy to mold the depth filter. Examples of the base material include nonwoven fabrics with an average fiber diameter of 300 nm to 1000 μm (spunbond nonwoven fabric, melt blow nonwoven fabric, electrospinning nonwoven fabric, through-air nonwoven fabric, airlaid nonwoven fabric, spunlace nonwoven fabric, wet-laid nonwoven fabric, etc.), woven and knitted fabrics, nets, and the like. The outer layer nonwoven fabric and the pre-filtration layer nonwoven fabric can also be used as the base material. The base material can be composed of the thermoplastic resins exemplified for the outer layer nonwoven fabric, but spunbond nonwoven fabric or melt blow nonwoven fabric composed of polyamide or polypropylene, or through-air nonwoven fabric or composite spunbond nonwoven fabric using composite fibers composed of polyethylene/polypropylene or polyethylene/polyester is preferable from the viewpoint of imparting strength to the precision filtration layer nonwoven fabric and processability. Particularly, in the case of the precision filtration layer nonwoven fabric being composed of polyamide, it is preferable to use a base material composed of polyamide. Moreover, in the case of using the pre-filtration layer nonwoven fabric as the base material, from the viewpoint of capture performance of fine particles, preferably the precision filtration layer nonwoven fabric is disposed adjacent to the downstream side with respect to the filtration direction.

The precision filtration layer nonwoven fabric is not particularly limited, but can be manufactured by an electrospinning method. By using an electrospinning method, a wide range of materials can be fiberized, and the average fiber diameter of the fibers constituting the precision filtration layer nonwoven fabric can be made small and uniform.

The electrospinning method is a method of discharging a spinning solution while applying an electric field to fiberize the discharged spinning solution and obtain fibers with very small fiber diameter on a collector. For instance, examples of such methods include spinning by extruding a spinning solution from a nozzle while applying an electric field, spinning by foaming a spinning solution while applying an electric field, and spinning by guiding a spinning solution to the surface of a cylindrical electrode while applying an electric field.

The spinning solution is not particularly limited as long as the spinning solution has spinnability, but for example, the above-mentioned resin dispersed in a solvent, dissolved in a solvent, or melted by heat or laser irradiation can be used. However, from the viewpoint of fiber fineness and uniformity, it is preferable to use resin dissolved in a solvent.

The solvent used in the spinning solution is not particularly limited, and examples include water, methanol, ethanol, propanol, acetone, N,N-dimethylformamide, N,N-dimethylacetamide, N,N-dimethylpropionamide, dimethyl sulfoxide, N-methyl-2-pyrrolidone, triethyl phosphate, propylene glycol monomethyl ether, diethylene glycol ethyl methyl ether, toluene, xylene, pyridine, formic acid, acetic acid, tetrahydrofuran, dichloromethane, chloroform, 1,1,1,3,3,3-hexafluoroisopropanol, and mixtures thereof.

The resin concentration in the spinning solution is not particularly limited, but 1% by weight to 50% by weight can be exemplified. Additionally, for the purpose of improving the stability and spinnability of electrospinning, the spinning solution may include 0.001% by weight to 5% by weight of a surfactant. Furthermore, within a range that does not significantly impair the effects of the present invention, additives such as antibacterial agents, deodorizing agents, antistatic agents, conductive materials, fluorescent materials, smoothing agents, hydrophilic agents, water-repellent agents, hydrophilic oil-repellent agents, antioxidants, weathering agents, and charge stabilizers may be included.

The applied voltage is not particularly limited as long as fibers can be formed and spinning can be performed stably, and 5 kV to 100 kV can be exemplified. Additionally, the distance between the nozzle and the collector is not particularly limited as long as the solvent can sufficiently volatilize, and 5 cm to 100 cm can be exemplified. Furthermore, the discharge rate of the spinning solution can be appropriately adjusted considering the average fiber diameter, CV value, and productivity of the obtained fibers, and 0.1 ml/hr to 50 ml/hr can be exemplified. The material of the collector is not particularly limited as long as the collector can collect electrospun fibers, but conductive materials such as metals can be suitably used. The shape of the collector is not particularly limited, but flat plate, shaft, and conveyor shapes can be exemplified. In the case of a flat plate-shaped collector, a sheet-like laminate can be obtained, and in the case of a shaft-shaped collector, a tube-shaped laminate can be obtained. In the case of a conveyor shape, sheet-like laminates can be continuously manufactured.

In the case of using a laminate for precision filtration layer, it is preferable to manufacture by directly electrospinning the precision filtration layer nonwoven fabric while conveying the base material with a conveyor. By manufacturing in this manner, the adhesion between the base material and the precision filtration layer nonwoven fabric is enhanced, making it easy to mold the depth filter. In particular, by configuring the base material and the precision filtration layer nonwoven fabric with similar resins, it is possible to further enhance the adhesion. Among these, from the viewpoints of water permeability, chemical resistance, and availability, it is preferable that the base material and the precision filtration layer nonwoven fabric are composed of polyamide resin.

(Support Layer)

The depth filter of the present invention is not particularly limited, but a support layer may be provided on the downstream side in the filtration direction of the precision filtration layer. The support layer is provided to maintain the shape of the pre-filtration layer and the precision filtration layer and to prevent the filter medium from falling off from the precision filtration layer. Examples of the support layer include a layer formed by winding a resin core material having openings, as well as nonwoven fabric, woven fabric, or nets. The nonwoven fabric constituting the support layer (support layer nonwoven fabric) may be the same as the outer layer nonwoven fabric, or a nonwoven fabric with even greater strength such as spunbond nonwoven fabric may be used.

The support layer nonwoven fabric is not particularly limited, but can be manufactured by the melt blow method described above. At this time, the discharge rate and hot air pressure may be gradually changed, or manufacturing may be performed under constant conditions or stepwise condition changes. Among these, from the viewpoint of efficiently producing depth filters continuously, it is preferable to form the support layer by gradually changing the discharge rate and hot air pressure so that the average fiber diameter and/or average basis weight continuously increases with respect to the filtration direction.

(Depth Filter)

The depth filter of the present invention has the above-described outer layer, pre-filtration layer, and precision filtration layer arranged in this order with respect to the filtration direction, and a support layer is arranged on the downstream side of the precision filtration layer as required. Additionally, layers other than the aforementioned may be formed on the upstream side of the outer layer, between the layers, and on the downstream side of the support layer.

The depth filter of the present invention is not particularly limited, but it is preferable to bond between the outer layer and the pre-filtration layer. In addition, although not particularly limited, it is preferable to bond between the pre-filtration layer and the precision filtration layer. Bonding between the layers in this manner can suppress compaction of the depth filter.

The depth filter of the present invention can be obtained by winding and fixing the above-described outer layer nonwoven fabric, pre-filtration layer nonwoven fabric, and precision filtration layer nonwoven fabric to a core material. In particular, when winding the outer layer nonwoven fabric, it is preferable to wind while heating by through-air heat treatment or far-infrared heaters for the purpose of melting the low-melting-point resin. The depth filter may be molded by sequentially winding each nonwoven fabric, and it is also possible to continuously mold by inserting each nonwoven fabric while winding a sheet serving as a base.

The diameter and thickness of the depth filter of the present invention can be appropriately set according to the target performance and properties of the filtrate. For example, in the case of a depth filter used for slurry filtration in the manufacturing process of CMP slurry, the inner diameter is preferably about 23 mm to 100 mm. By setting the inner diameter to 23 mm or more, a sufficient amount of liquid flowing to the inner wall side can be secured. By setting the inner diameter to 100 mm or less, the depth filter can be made compact. Also, the thickness (= (outer diameter - inner diameter) ÷ 2) is preferably 10 mm to 30 mm. By setting the thickness to 10 mm or more, a sufficient change ratio of average fiber diameter and average basis weight can be provided. By setting the thickness to 30 mm or less, a depth filter with excellent liquid permeability can be achieved.

The depth filter manufactured as described above is suitably used as a cylindrical depth filter by cutting to an appropriate size and attaching end caps to both ends. The depth filter can also be used by enclosing in small capsules.

Furthermore, the above manufacturing method is only an overview, and in addition to the above processes, known processes such as heat treatment, cooling, chemical treatment, molding, and washing can be performed as required.

Examples

Hereinafter, the present invention will be described in detail by examples, but the present invention is not limited to these. The measurement methods or definitions of physical property values shown in the examples are shown below.

<Average Fiber Diameter of Fibers Constituting Each Nonwoven Fabric>

From the cross-section of the filter photographed with an electron microscope, the length (diameter) in the direction perpendicular to the length direction of each fiber was measured for 100 fibers, and the arithmetic average value was taken as the average fiber diameter. For this measurement, image processing software "Scion Image" (product name) from Scion Corporation was used.

<Average Basis Weight of Each Nonwoven Fabric>

For the nonwoven fabric obtained by spinning, measurement samples cut into circular shapes of 100 cm$^2$ were collected at three points in the width direction (left side, center, right side), and the weight of each was measured to determine the weight per unit area (g/m$^2$), with the arithmetic average value taken as the basis weight.

<Melt Flow Rate (MFR) of Resin>

Measurement was performed according to the method of JIS K 7210-1:2014 using a standard die under conditions of temperature 230°C and load 2.16 kg.

<Melting Point of Resin>

Using a differential scanning calorimeter (DSC8500) manufactured by Perkin Elmer Japan, the temperature corresponding to the peak on the melting absorption curve obtained when the thermoplastic resin was heated at 10°C/min was taken as the melting point of the resin.

<Water Permeability Performance>

Water was passed through the filter housing without mounting a filter, and the relationship between the water flow rate and pressure loss before and after the housing was determined, with this value taken as the piping resistance. Next, water was passed through (maximum pressure 0.28 MPa) with the test specimen filter mounted in the housing, and the water flow rate and pressure loss before and after the housing were determined, with this value taken as the provisional pressure loss. Then, the value obtained by subtracting the piping resistance from the provisional pressure loss was taken as the true differential pressure of the test specimen. Water flow was conducted at flow rates of 10 L/min, 15 L/min, and 20 L/min. Cases where water flow was not possible were marked as ×.

<Filtration Performance>

Collection efficiency and differential pressure were measured over time according to the following test powder and method.

As test powder, spherical silica (Seahostar KE-S30 (average particle diameter 300 nm)) manufactured by Nippon Shokubai was used. To a magnetic mortar, 3 g of spherical silica and 3 mL of 0.2% sodium hexametaphosphate aqueous solution were added and mixed with a pestle. Next, the previously prepared spherical silica was added to a 250 mL standard container of a planetary centrifugal mixer stirring and defoaming device Mazerustar manufactured by Kurabo Industries, and further, 0.2% sodium hexametaphosphate aqueous solution was added until the total weight reached 250 g, followed by stirring for 20 minutes. 250 g of the spherical silica dispersion was transferred to a 3 L flask, and ultrapure water was further added to make a total of 3 L to prepare the spherical silica dispersion.

Next, the filter was mounted in a filtration testing machine, and circulating water flow was conducted at a rate of 10 L/min for 30 minutes.

Thereafter, 30 L of pure water was placed in the tank of the filtration testing machine, and while stirring with a stirring blade, 3 L of spherical silica dispersion was continuously fed to the 30 L tank at a rate of 100 mL/min, and passed through the filtration testing machine equipped with the filter at a rate of 10 L/min. The liquid flow and addition of spherical silica dispersion were continued until the differential pressure between inlet pressure and outlet pressure reached 300 kPa, and when flowing through 3 L of spherical silica dispersion, immediately before completion, a new 3 L of spherical silica dispersion was added to continue filtration. During this time, fluid was collected from the filter inlet side and outlet side as needed, and this was used as samples.

For the collected samples, the particle count before and after the filter was measured using Accusizer 780APS (manufactured by PSS Japan Co., Ltd.), and collection efficiency was calculated using the following calculation formula.

Collection efficiency (%) = (1 - particle count after filter passage/particle count before filter passage) × 100

Collection efficiency was also determined from measured values for particles with a diameter of 0.57 μm.

Since filtration performance evaluation was conducted after water permeability performance, collection efficiency of filters that could not pass water was marked as ×.

<Gel Capture Performance>

1 L of ultrapure water placed in a beaker was heated in a water bath set at 95°C, and 5 g of methylcellulose 25 (manufactured by Fujifilm Wako Pure Chemical Corporation) was gradually added and stirred for 10 minutes. Thereafter, the mixture was allowed to cool in an oven set at 28°C and left still for 12 hours or more. Next, the gel precipitated at the bottom of the beaker was subjected to ultrasonic treatment and stirring to prepare a gel dispersion.

A filter with a length of 3 cm having both ends welded with end caps was mounted on a filtration testing machine, water was passed through at a maximum pressure of 280 kPa, and the gel dispersion prepared by the above method was used and fed by a pump at a rate of 100 mL/min for one-pass filtration until 1 L of the prepared gel dispersion was consumed. Gel dispersion before and after filter passage was collected, the particle count before and after the filter was measured using Accusizer 780APS (manufactured by PSS Japan Co., Ltd.), and collection efficiency was calculated using the following calculation formula. The measurement was conducted using ultrapure water at 18°C.

Collection efficiency (%) = (1 - particle count after filter passage/particle count before filter passage) $\times$ 100

Collection efficiency of filters that could not pass water was marked as $\times$.

[Example 1]

<Manufacture of Precision Filtration Layer Laminate 1>

Nylon 6 resin manufactured by UNITIKA (product name: A1030BRT) was dissolved at a concentration of 15% by weight in a co-solvent of formic acid and acetic acid (30/70 (w/w)) to prepare an electrospinning solution. The obtained spinning solution was electrospun using a multi-hole spinneret having 12 nozzle holes with an inner diameter of 0.3 mm under conditions of solution supply rate to each nozzle hole of 1.0 mL/h, applied voltage of 50.0 kV, and spinning distance of 15.0 cm. On the collector electrode, nylon spunbond nonwoven fabric manufactured by Asahi Kasei (product name: ELTAS Nylon (N05050), average fiber diameter: 15.60 $\mu$m, basis weight: 50 g/m$^2$) was placed as a base material, and the electrospun precision filtration layer nonwoven fabric was collected on the base material to 2.5 g/m$^2$, thereby manufacturing a precision filtration layer laminate 1. The obtained precision filtration layer laminate 1 showed good formation with no peeling or wrinkling of the precision filtration layer nonwoven fabric observed. The average fiber diameter of the precision filtration layer nonwoven fabric was 270 nm, and the CV value of fiber diameter was 0.12.

<Manufacture of Nonwoven Fabric 1 Having Continuous Fiber Diameter Gradient>

Polypropylene polymerized by metallocene catalyst (MF650Y, manufactured by PolyMirae Co., Ltd., MFR; 1500 g/10 min, melting point 165°C) was used as the high-melting-point resin, and copolymerized polypropylene (SOW0279, manufactured by Japan Polypropylene, MFR; 60 g/10 min, melting point 140°C) was used as the low-melting-point resin.

A melt blow spinneret with a total of 501 holes was used, in which spinning holes for discharging high-melting-point resin and spinning holes for discharging low-melting-point resin, each having a hole diameter of 0.2 mm, were alternately arranged in a single row.

At a spinning temperature of 370°C, the high-melting-point resin and the low-melting-point resin (weight ratio 5:5) were extruded while continuously changing the discharge rate from 234 g/min to 40 g/min, and the hot air pressure at a temperature of 400°C was continuously changed from 11.8 kPa to 31.7 kPa, and then maintained at constant conditions for a while. Subsequently, the resins were extruded while continuously changing the discharge rate from 40 g/min to 234 g/min, and the hot air pressure at a temperature of 400°C was continuously changed from 31.7 kPa to 11.8 kPa for spinning, spraying onto a conveyor net with a suction device, and winding onto a paper tube roll at 9 m/min to obtain a nonwoven fabric 1 having continuous fiber diameter gradient.

The obtained nonwoven fabric 1 was a nonwoven fabric composed of a portion where the average fiber diameter continuously changed from 11.57 $\mu$m to 0.61 $\mu$m and the average basis weight continuously changed from 47.7 g/m$^2$ to 14.7 g/m$^2$ (corresponding to outer layer nonwoven fabric), a portion where the average fiber diameter was 0.61 $\mu$m and the average basis weight was constant at 14.7 g/m$^2$ (corresponding to pre-filtration layer nonwoven fabric), and a portion where the average fiber diameter continuously changed from 0.61 $\mu$m to 11.57 $\mu$m and the average basis weight continuously changed from 14.7 g/m$^2$ to 47.7 g/m$^2$ (corresponding to support layer nonwoven fabric).

<Manufacture of Depth Filter>

The nonwoven fabric 1 having continuous fiber diameter gradient was heated in a through-air processing machine under conditions of conveyor speed 8.5 m/min and set temperature 131°C, and immediately thereafter wound onto a core material with an outer diameter of 30 mm to obtain a cylindrical molded product. At this time, the precision filtration layer laminate 1 with a length of 0.8 m was inserted at the position that became the most downstream side in the pre-filtration layer nonwoven fabric portion.

The obtained cylindrical molded product included, from the outside, an outer layer, a pre-filtration layer, a precision filtration layer, and a support layer in this order, and in the outer layer, the nonwoven fabric on the most upstream side with respect to the filtration direction had an average fiber diameter of 11.57 $\mu$m and an average basis weight of 47.7 g/m$^2$, and the nonwoven fabric on the most downstream side had an average fiber diameter of 0.61 $\mu$m and an average basis weight of 14.7 g/m$^2$. The pre-filtration layer was a layer in which a pre-filtration layer nonwoven fabric having constant average fiber diameter of 0.61 $\mu$m and average basis weight of 14.7 g/m$^2$ was wound, the precision filtration layer was a layer in which a laminate of a melt blow nonwoven fabric (corresponding to base material) having an average fiber diameter of 1.37 $\mu$m and the precision filtration layer laminate 1 was wound, and the support layer was a layer in which the average fiber diameter continuously increased from 0.61 $\mu$m to 11.57 $\mu$m and the average basis weight continuously increased from 14.7 g/m$^2$ to 47.7 g/m$^2$ with respect to the filtration direction.

The obtained cylindrical molded product was allowed to cool at room temperature, removed from the core material, and both ends were cut to obtain a depth filter with a total length of 245 mm, an outer diameter of 68 mm, and an inner diameter of 30 mm. In addition, the outer layer nonwoven fabric and the pre-filtration layer nonwoven fabric were bonded between the wound nonwoven fabrics, and the outer layer and the pre-filtration layer were bonded.

Thereafter, both end portions of the depth filter were sealed with flat gaskets (polyethylene foam with a foaming ratio of 3 times and a thickness of 3 mm cut into a donut shape) to achieve a total length of 250 mm. The flat gaskets and the cylindrical molded product were thermally bonded and integrated.

[Example 2]

<Manufacture of Precision Filtration Layer Laminate 2>

A precision filtration layer laminate 2 was manufactured in the same manner as in Example 1, except that a polypropylene melt blown nonwoven fabric manufactured by Mitsui Chemicals (product name: nano2, average fiber diameter: 600 nm, basis weight: 10 g/m$^2$) was used as the base material, and the basis weight of the precision filtration layer nonwoven fabric was set to 0.8 g/m$^2$. The obtained precision filtration layer laminate 2 showed good formation with no peeling or wrinkling of the precision filtration layer nonwoven fabric observed. The average fiber diameter of the precision filtration layer nonwoven fabric was 270 nm, and the CV value of fiber diameter was 0.12.

<Preparation of Pre-filtration Layer Nonwoven Fabric 2>

A 6-layer laminate of polypropylene melt blow nonwoven fabric manufactured by Mitsui Chemicals (product name: nano2; average fiber diameter 600 nm, average basis weight 10 g/m$^2$) was used.

<Manufacture of Nonwoven Fabric 2 Having Continuous Fiber Diameter Gradient>

Polypropylene (SA08A (manufactured by Japan Polypropylene, MFR; 80 g/10 min, melting point 165°C) was used as the high-melting-point resin, and copolymerized polypropylene (SOW0279, (manufactured by Japan Polypropylene, MFR; 60 g/10 min, melting point 140°C) was used as the low-melting-point resin.

At a spinning temperature of 360°C, the high-melting-point resin and the low-melting-point resin (weight ratio 5:5) were extruded using the same melt blow spinneret as in Example 1 while continuously changing the discharge rate from 120 g/min to 20 g/min, and the hot air pressure at a temperature of 400°C was continuously changed from 10 kPa to 99 kPa, and then maintained at constant conditions for a while. Subsequently, the resins were extruded while continuously changing the discharge rate from 20 g/min to 120 g/min, and the hot air pressure at a temperature of 400°C was continuously changed from 99 kPa to 10 kPa for spinning, spraying onto a conveyor net with a suction device, and winding onto a paper tube roll at 9 m/min to obtain a nonwoven fabric 2 having continuous fiber diameter gradient.

The obtained nonwoven fabric 2 was a nonwoven fabric composed of a portion where the average fiber diameter continuously changed from 24 $\mu$m to 1.37 $\mu$m and the average basis weight continuously changed from 47.7 g/m$^2$ to 10.7 g/m$^2$ (corresponding to outer layer nonwoven fabric), a portion where the average fiber diameter was 1.37 $\mu$m and the average basis weight was constant at 14.7 g/m$^2$ (corresponding to base sheet), and a portion where the average fiber diameter continuously changed from 1.37 $\mu$m to 24 $\mu$m and the average basis weight continuously changed from 10.7 g/m$^2$ to 47.7 g/m$^2$ (corresponding to support layer nonwoven fabric).

<Manufacture of Depth Filter>

The nonwoven fabric 2 having continuous fiber diameter gradient was heated in a through-air processing machine under conditions of conveyor speed 8.5 m/min and set temperature 131°C, and immediately thereafter wound onto a core material with an outer diameter of 30 mm to obtain a cylindrical molded product. At this time, the precision filtration layer laminate 2 with a length of 2.4 m and the pre-filtration layer nonwoven fabric 2 with a length of 0.8 m were sequentially inserted into the portion corresponding to the base sheet in the nonwoven fabric 2 (the portion where the average fiber diameter was 1.37 $\mu$m and the average basis weight was constant at 14.7 g/m$^2$).

The obtained cylindrical molded product included, from the outside, an outer layer, a pre-filtration layer, a precision filtration layer, and a support layer in this order, and in the outer layer, the nonwoven fabric on the most upstream side with respect to the filtration direction had an average fiber diameter of 24 $\mu$m and an average basis weight of 47.7 g/m$^2$, and the nonwoven fabric on the most downstream side had an average fiber diameter of 1.37 $\mu$m and an average basis weight of 10.7 g/m$^2$. The pre-filtration layer was a layer in which a laminate of a melt blow nonwoven fabric (corresponding to base sheet) having an average fiber diameter of 1.37 $\mu$m and the pre-filtration layer nonwoven fabric 2 was wound, the precision filtration layer was a layer in which a laminate of a melt blow nonwoven fabric (corresponding to base material) having an average fiber diameter of 1.37 $\mu$m and the precision filtration layer laminate 2 was wound, and the support layer was a layer in which the average fiber diameter continuously increased from 1.37 $\mu$m to 24 $\mu$m and the average basis weight continuously increased from 10.7 g/m$^2$ to 47.7 g/m$^2$ with respect to the filtration direction.

Next, a depth filter was obtained in the same manner as in Example 1. In addition, the outer layer nonwoven fabric and the pre-filtration layer nonwoven fabric were bonded between the wound nonwoven fabrics, and the outer layer and the pre-filtration layer were bonded.

[Example 3]

<Manufacture of Precision Filtration Layer Laminate 3>

A precision filtration layer laminate 3 was manufactured in the same manner as in Example 1, except that a nylon melt blown nonwoven fabric manufactured by Tapyrus (product name: N050F-00F, average fiber diameter: 4.59 $\mu$m, basis weight: 50 g/m$^2$) was used as the base material, and the basis weight of the precision filtration layer nonwoven fabric was set to 3.0 g/m$^2$. The obtained precision filtration layer laminate 3 showed good formation with no peeling or wrinkling of the precision filtration layer nonwoven fabric observed. The average fiber diameter of the precision filtration layer nonwoven fabric was 270 nm, and the CV value of fiber diameter was 0.12.

<Preparation of Pre-filtration Layer Nonwoven Fabric 3>

A 6-layer laminate of polypropylene melt blow nonwoven fabric manufactured by Mitsui Chemicals (product name: nano2; average fiber diameter 600 nm, average basis weight 10 g/m$^2$) was used.

<Manufacture of Nonwoven Fabric 3 Having Continuous Fiber Diameter Gradient>

A nonwoven fabric 3 having continuous fiber diameter gradient was manufactured in the same manner as in Example 1, except that spinning was performed by continuously changing the hot air pressure at a temperature of 400°C from 10.2 kPa to 34.5 kPa.

The obtained nonwoven fabric 3 was a nonwoven fabric composed of a portion where the average fiber diameter continuously changed from 9.15 $\mu$m to 0.63 $\mu$m and the average basis weight continuously changed from 54.0 g/m$^2$ to 16.8 g/m$^2$ (corresponding to outer layer nonwoven fabric), a portion where the average fiber diameter was 0.63 $\mu$m and the average basis weight was constant at 16.8 g/m$^2$ (corresponding to pre-filtration layer nonwoven fabric), and a portion where the average fiber diameter continuously changed from 0.63 $\mu$m to 9.15 $\mu$m and the average basis weight continuously changed from 16.8 g/m$^2$ to 54.0 g/m$^2$ (corresponding to support layer nonwoven fabric).

<Manufacture of Depth Filter>

The nonwoven fabric 3 having continuous fiber diameter gradient was heated in a through-air processing machine under conditions of conveyor speed 8.5 m/min and set temperature 131°C, and immediately thereafter wound onto a core material with an outer diameter of 30 mm to obtain a cylindrical molded product. At this time, the precision filtration layer laminate 3 with a length of 0.8 m was inserted at the position that became the most downstream side in the pre-filtration layer nonwoven fabric portion, and then the pre-filtration layer nonwoven fabric 3 with a length of 0.6 m was sequentially inserted.

The obtained cylindrical molded product included, from the outside, an outer layer, a pre-filtration layer, a precision filtration layer, and a support layer in this order, and in the outer layer, the nonwoven fabric on the most upstream side with respect to the filtration direction had an average fiber diameter of 9.15 $\mu$m and an average basis weight of 54.0 g/m$^2$, and the nonwoven fabric on the most downstream side had an average fiber diameter of 0.63 $\mu$m and an average basis weight of 16.8 g/m$^2$. The pre-filtration layer was a layer in which a laminate of a melt blow nonwoven fabric (corresponding to first pre-filtration layer nonwoven fabric) having an average fiber diameter of 0.63 $\mu$m and the pre-filtration layer nonwoven fabric 2 (corresponding to second pre-filtration layer nonwoven fabric) was wound, the precision filtration layer was a layer in which a laminate of a melt blow nonwoven fabric (corresponding to base material) having an average fiber diameter of 0.63 $\mu$m and the precision filtration layer laminate 3 was wound, and the support layer was a layer in which the average fiber diameter continuously increased from 0.63 $\mu$m to 9.15 $\mu$m and the average basis weight continuously increased from 16.8 g/m$^2$ to 54.0 g/m$^2$ with respect to the filtration direction.

Otherwise, a depth filter was manufactured in the same manner as in Example 1. In addition, the outer layer nonwoven fabric and the pre-filtration layer nonwoven fabric were bonded between the wound nonwoven fabrics, and the outer layer and the pre-filtration layer were bonded.

[Example 4]

<Manufacture of Precision Filtration Layer Laminate 4>

A precision filtration layer laminate 4 was manufactured in the same manner as in Example 1, except that a polypropylene melt blown nonwoven fabric manufactured by Mitsui Chemicals (product name: nano2, average fiber diameter: 600 nm, basis weight: 10 g/m$^2$) was used as the base material, and the basis weight of the precision filtration layer nonwoven fabric was set to 2.7 g/m$^2$. The obtained precision filtration layer laminate 4 showed good formation with no peeling or wrinkling of the precision filtration layer nonwoven fabric observed. The average fiber diameter of the precision filtration layer nonwoven fabric was 270 nm, and the CV value of fiber diameter was 0.12.

<Manufacture of Nonwoven Fabric 4 Having Continuous Fiber Diameter Gradient>

MF650X (manufactured by PolyMirae Co., Ltd., MFR; 1200 g/10 min, melting point 165°C) was used as the high-melting-point resin, and SOW0279 (manufactured by Japan Polypropylene, MFR; 60 g/10 min, melting point 140°C) was used as the low-melting-point resin.

At a spinning temperature of 360°C, the high-melting-point resin and the low-melting-point resin (weight ratio 5:5) were extruded using the same melt blow spinneret as in Example 1 while continuously changing the discharge rate from 233 g/min to 42 g/min, and the hot air pressure at a temperature of 400°C was continuously changed from 13.9 kPa to 32.1 kPa, and then maintained at constant conditions for a while. Subsequently, the resins were extruded while continuously changing the discharge rate from 42 g/min to 233 g/min, and the hot air pressure at a temperature of 400°C was continuously changed from 32.1 kPa to 13.9 kPa for spinning, spraying onto a conveyor net with a suction device, and winding onto a paper tube roll at 9 m/min to obtain a nonwoven fabric 4 having continuous fiber diameter gradient.

The obtained nonwoven fabric 4 was a nonwoven fabric composed of a portion where the average fiber diameter continuously changed from 13.6 $\mu$m to 0.71 $\mu$m and the average basis weight continuously changed from 47.7 g/m$^2$ to 14.2 g/m$^2$ (corresponding to outer layer nonwoven fabric), a portion where the average fiber diameter was 0.71 $\mu$m and the average basis weight was constant at 9.9 g/m$^2$ (corresponding to pre-filtration layer nonwoven fabric), and a portion where the average fiber diameter continuously changed from 0.71 $\mu$m to 13.6 $\mu$m and the average basis weight continuously changed from 14.2 g/m$^2$ to 47.7 g/m$^2$ (corresponding to support layer nonwoven fabric).

<Manufacture of Depth Filter>

A cylindrical molded product was obtained in the same manner as in Example 3, except that the nonwoven fabric 4 was used instead of the nonwoven fabric 3, and the precision filtration layer laminate 4 was used instead of the precision filtration layer laminate 3. The obtained cylindrical molded product included, from the outside, an outer layer, a pre-filtration layer, a precision filtration layer, and a support layer in that order, and in the outer layer, the nonwoven fabric on the most upstream side with respect to the filtration direction had an average fiber diameter of 13.6 $\mu$m and an average basis weight of 47.7 g/m$^2$, and the nonwoven fabric on the most downstream side had an average fiber diameter of 0.71 $\mu$m and an average basis weight of 14.2 g/m$^2$. The pre-filtration layer was a layer in which a laminate of a melt blow nonwoven fabric (corresponding to first pre-filtration layer nonwoven fabric) having an average fiber diameter of 0.71 $\mu$m and the pre-filtration layer nonwoven fabric 2 (corresponding to second pre-filtration layer nonwoven fabric) was wound, the precision filtration layer was a layer in which a laminate of a melt blow nonwoven fabric (corresponding to base material) having an average fiber diameter of 0.71 $\mu$m and the precision filtration layer laminate 4 was wound, and the support layer was a layer in which the average fiber diameter continuously increased from 0.71 $\mu$m to 13.6 $\mu$m and the average basis weight continuously increased from 14.2 g/m$^2$ to 47.7 g/m$^2$ with respect to the filtration direction.

Otherwise, a depth filter was manufactured in the same manner as in Example 1. In addition, the outer layer nonwoven fabric and the pre-filtration layer nonwoven fabric were bonded between the wound nonwoven fabrics, and the outer layer and the pre-filtration layer were bonded.

[Example 5]

<Manufacture of Precision Filtration Layer Laminate 5>

A precision filtration layer laminate 5 was manufactured in the same manner as in Example 1, except that a polypropylene melt blown nonwoven fabric manufactured by Mitsui Chemicals (product name: nano2, average fiber diameter: 600 nm, basis weight: 10 g/m$^2$) was used as the base material, and the basis weight of the precision filtration layer nonwoven fabric was set to 2.6 g/m$^2$. The obtained precision filtration layer laminate 5 showed good formation with no peeling or wrinkling of the precision filtration layer nonwoven fabric observed. The average fiber diameter of the precision filtration layer nonwoven fabric was 270 nm, and the CV value of fiber diameter was 0.12.

<Manufacture of Nonwoven Fabric 5 Having Continuous Fiber Diameter Gradient>

MF650Z (manufactured by PolyMirae Co., Ltd., MFR; 2300 g/10 min, melting point 165°C) was used as the high-melting-point resin, and SOW0279 (manufactured by Japan Polypropylene, MFR; 60 g/10 min, melting point 140°C) was used as the low-melting-point resin.

At a spinning temperature of 360°C, the high-melting-point resin and the low-melting-point resin (weight ratio 5:5) were extruded using the same melt blow spinneret as in Example 1 while continuously changing the discharge rate from 236 g/min to 41 g/min, and the hot air pressure at a temperature of 400°C was continuously changed from 11.9 kPa to 32.3 kPa, and then maintained at constant conditions for a while. Subsequently, the resins were extruded while continuously changing the discharge rate from 41 g/min to 236 g/min, and the hot air pressure at a temperature of 400°C was continuously changed from 11.9 kPa to 32.3 kPa for spinning, spraying onto a conveyor net with a suction device, and winding onto a paper tube roll at 9 m/min to obtain a nonwoven fabric 5 having continuous fiber diameter gradient.

The obtained nonwoven fabric 5 was a nonwoven fabric composed of a portion where the average fiber diameter continuously changed from 8.8 $\mu$m to 0.64 $\mu$m and the average basis weight continuously changed from 54.7 g/m$^2$ to 17.3 g/m$^2$ (corresponding to outer layer nonwoven fabric), a portion where the average fiber diameter was 0.64 $\mu$m and the average basis weight was constant at 17.3 g/m$^2$ (corresponding to pre-filtration layer nonwoven fabric), and a portion where the average fiber diameter continuously changed from 0.64 $\mu$m to 8.8 $\mu$m and the average basis weight continuously changed from 17.3 g/m$^2$ to 54.7 g/m$^2$ (corresponding to support layer nonwoven fabric).

<Manufacture of Depth Filter>

A cylindrical molded product was obtained in the same manner as in Example 4, except that the nonwoven fabric 5 was used instead of the nonwoven fabric 4, and the precision filtration layer laminate 5 was used instead of the precision filtration layer laminate 4. The obtained cylindrical molded product included, from the outside, an outer layer, a pre-filtration layer, a precision filtration layer, and a support layer in that order, and in the outer layer, the nonwoven fabric on the most upstream side with respect to the filtration direction had an average fiber diameter of 8.8 $\mu$m and an average basis weight of 54.7 g/m$^2$, and the nonwoven fabric on the most downstream side had an average fiber diameter of 0.64 $\mu$m and an average basis weight of 17.3 g/m$^2$. The pre-filtration layer was a layer in which a laminate of a melt blow nonwoven fabric (corresponding to first pre-filtration layer nonwoven fabric) having an average fiber diameter of 0.64 $\mu$m and the pre-filtration layer nonwoven fabric 2 (corresponding to second pre-filtration layer nonwoven fabric) was wound, the precision filtration layer was a layer in which a laminate of a melt blow nonwoven fabric (corresponding to base material) having an average fiber diameter of 0.64 $\mu$m and the precision filtration layer laminate 5 was wound, and the support layer was a layer in which the average fiber diameter continuously increased from 0.64 $\mu$m to 8.8 $\mu$m and the average basis weight continuously increased from 17.3 g/m$^2$ to 54.7 g/m$^2$ with respect to the filtration direction.

Otherwise, a depth filter was manufactured in the same manner as in Example 1. In addition, the outer layer nonwoven fabric and the pre-filtration layer nonwoven fabric were bonded between the wound nonwoven fabrics, and the outer layer and the pre-filtration layer were bonded.

[Comparative Example 1]

<Manufacture of Nonwoven Fabric 6 Having Continuous Fiber Diameter Gradient>

At a spinning temperature of 360°C, the high-melting-point resin and the low-melting-point resin (weight ratio 5:5) were extruded using the same resins and melt blow spinneret as in Example 2 while continuously changing the discharge rate from 120 g/min to 20 g/min, and the hot air pressure at a temperature of 400°C was continuously changed from 10 kPa to 99 kPa. Then, the resins were immediately extruded while continuously changing the discharge rate from 20 g/min to 120 g/min, and the hot air pressure at a temperature of 400°C was continuously changed from 99 kPa to 10 kPa for spinning, spraying onto a conveyor net with a suction device, and winding onto a paper tube roll at 9 m/min to obtain a nonwoven fabric 6 having continuous fiber diameter gradient.

The obtained nonwoven fabric 6 was a nonwoven fabric composed of a portion where the average fiber diameter continuously changed from 24 $\mu$m to 1.37 $\mu$m and the average basis weight continuously changed from 47.7 g/m$^2$ to 10.7 g/m$^2$ (corresponding to outer layer nonwoven fabric), and a portion where the average fiber diameter continuously changed from 1.37 $\mu$m to 24 $\mu$m and the average basis weight continuously changed from 10.7 g/m$^2$ to 47.7 g/m$^2$, and there was no portion corresponding to the pre-filtration layer nonwoven fabric (corresponding to support layer nonwoven fabric).

<Manufacture of Depth Filter>

The nonwoven fabric 6 having continuous fiber diameter gradient was heated in a through-air processing machine under conditions of conveyor speed 8.5 m/min and set temperature 131°C, and immediately thereafter wound onto a core material with an outer diameter of 30 mm to obtain a cylindrical molded product.

The obtained cylindrical molded product included, from the outside, an outer layer and a support layer in this order, and in the outer layer, the nonwoven fabric on the most upstream side with respect to the filtration direction had an average fiber diameter of 24 $\mu$m and an average basis weight of 47.7 g/m$^2$, and the nonwoven fabric on the most downstream side had an average fiber diameter of 1.37 $\mu$m and an average basis weight of 10.7 g/m$^2$. In addition, the support layer was a layer in which the average fiber diameter continuously increased from 1.37 $\mu$m to 24 $\mu$m and the average basis weight continuously increased from 10.7 g/m$^2$ to 47.7 g/m$^2$ with respect to the filtration direction.

Next, a depth filter was obtained in the same manner as in Example 1.

[Comparative Example 2]

<Manufacture of Precision Filtration Layer Laminate 6>

A polyvinylidene fluoride copolymer resin manufactured by Arkema (product name: Kynar 3120-50) was dissolved at a concentration of 18% by weight in a co-solvent of N,N-dimethylformamide and acetone (60/40 (w/w)) to prepare an electrospinning solution. The obtained spinning solution was electrospun using a multi-hole spinneret having 8 nozzle holes with an inner diameter of 0.3 mm under conditions of solution supply rate to each nozzle hole of 3.0 mL/h, applied voltage of 45.0 kV, and spinning distance of 12.5 cm. On the collector electrode, through-air nonwoven fabric (basis weight: 40 g/m$^2$) composed of 3 dtex/f heat-fusible composite fibers (sheath/core = high-density polyethylene/polypropylene, sheath-core ratio 50/50 volume%) was placed as a base material, and the electrospun precision filtration layer nonwoven fabric was collected on the base material to 1.5 g/m$^2$, thereby manufacturing precision filtration layer laminate 6. The obtained precision filtration layer laminate 6 showed good formation with no peeling or wrinkling of the precision filtration layer nonwoven fabric observed. The average fiber diameter of the precision filtration layer nonwoven fabric was 230 nm, and the CV value of fiber diameter was 0.49.

<Manufacture of Nonwoven Fabric 7>

At a spinning temperature of 340°C, the high-melting-point resin and the low-melting-point resin (weight ratio 5:5) were extruded using the same resins and melt blow spinneret as in Example 2 at a discharge rate of 240 g/min, and the hot air pressure at a temperature of 400°C was maintained constant at 30.7 kPa for spinning, spraying onto a conveyor net with a suction device, and winding onto a paper tube roll at 9 m/min to obtain a nonwoven fabric 7.

The obtained nonwoven fabric 7 did not have a fiber diameter gradient and a basis weight gradient, and had an average fiber diameter of 5 $\mu$m and an average basis weight of 25 g/m$^2$.

<Manufacture of Depth Filter>

The nonwoven fabric 7 was heated in a through-air processing machine under conditions of conveyor speed 8.5 m/min and set temperature of 131°C, and immediately thereafter wound onto a core material with an outer diameter of 30 mm to obtain a cylindrical molded product. At this time, during the winding process, the precision filtration layer laminate 6 with a length of 0.8 m was inserted, and after the insertion, the nonwoven fabric 7 continued to be wound.

The obtained cylindrical molded product included, from the outside, a layer in which the nonwoven fabric 7 was wound, a layer in which a laminate of the nonwoven fabric 7 and the precision filtration layer nonwoven fabric 6 was wound, and a layer in which the nonwoven fabric 7 was wound, in this order.

Next, a depth filter was obtained in the same manner as in Example 1.

[Comparative Example 3]

<Manufacture of Precision Filtration Layer Laminate 7>

A precision filtration layer laminate 7 was manufactured in the same manner as in Comparative Example 1, except that the basis weight of the precision filtration layer nonwoven fabric was set to 3.0 $g/m^2$. The obtained precision filtration layer laminate 7 showed good formation with no peeling or wrinkling of the precision filtration layer nonwoven fabric observed. The average fiber diameter of the precision filtration layer nonwoven fabric was 230 nm, and the CV value of fiber diameter was 0.49.

<Manufacture of Depth Filter>

A depth filter was obtained in the same manner as in Comparative Example 2, except that the precision filtration layer laminate 7 was used instead of the precision filtration layer laminate 6.

[Comparative Example 4]

Profile Nano manufactured by Japan Pall was used.

The results of water permeability performance, filtration performance, and gel capture performance of Examples 1 to 5 and Comparative Examples 1 to 4 are shown in Table 1, Table 2, and Table 3, respectively.

[Table 1]

| <Water Permeability Performance> | | | | |
|---|---|---|---|---|
| | Water flow rate (L/min) | 10 | 15 | 20 |
| Example 1 | Differential pressure (kPa·s) | 55 | 91 | 126 |
| Example 2 | Differential pressure (kPa·s) | 102 | 150 | 201 |
| Example 3 | Differential pressure (kPa·s) | 91 | 148 | 202 |
| Example 4 | Differential pressure (kPa·s) | 105 | 167 | 233 |
| Example 5 | Differential pressure (kPa·s) | 110 | 179 | 248 |
| Comparative Example 1 | Differential pressure (kPa·s) | 40 | 77 | 148 |
| Comparative Example 2 | Differential pressure (kPa·s) | 27 | 46 | 65 |
| Comparative Example 3 | Differential pressure (kPa·s) | × | - | - |
| Comparative Example 4 | Differential pressure (kPa·s) | 167 | 275 | - |

[Table 2]

| <Filtration Performance> | | | | | | | | | |
|---|---|---|---|---|---|---|---|---|---|
| Example 1 | Collection efficiency (%) | >99 | >99 | >99 | >99 | >99 | >99 | >99 | >99 |
| | Differential pressure (kPa·s) | 53 | 69 | 85 | 105 | 140 | 220 | 260 | 300 |
| Example 2 | Collection efficiency (%) | >99 | >99 | >99 | >99 | >99 | >99 | >99 | |
| | Differential pressure (kPa·s) | 94 | 100 | 120 | 150 | 220 | 270 | 300 | |
| Example 3 | Collection efficiency (%) | >99 | >99 | >99 | >99 | >99 | >99 | >99 | >99 |
| | Differential pressure (kPa·s) | 89 | 95 | 105 | 120 | 168 | 240 | 290 | 300 |

(continued)

| <Filtration Performance> | | | | | | | | | |
|---|---|---|---|---|---|---|---|---|---|
| Example 4 | Collection efficiency (%) | >99 | >99 | >99 | >99 | >99 | >99 | >99 | >99 |
| | Differential pressure (kPa·s) | 99 | 106 | 118 | 135 | 170 | 240 | 280 | 300 |
| Example 5 | Collection efficiency (%) | >99 | >99 | >99 | >99 | >99 | >99 | >99 | >99 |
| | Differential pressure (kPa·s) | 104 | 115 | 125 | 140 | 170 | 230 | 270 | 300 |
| Comparative Example 1 | Collection efficiency (%) | 77.2 | 73.6 | 69.7 | 64.5 | 58.4 | 50.4 | 43 | |
| | Differential pressure (kPa·s) | 45 | 45 | 45 | 45 | 45 | 45 | 45 | |
| Comparative Example 2 | Collection efficiency (%) | >99 | >99 | >99 | >99 | >99 | 68.3 | | |
| | Differential pressure (kPa·s) | 20 | 38 | 145 | 236 | 278 | 236 | | |
| Comparative Example 3 | Collection efficiency (%) | × | | | | | | | |
| | Differential pressure (kPa·s) | - | | | | | | | |
| Comparative Example 4 | Collection efficiency (%) | >99 | >99 | 98.8 | 97.1 | 96.4 | 95.8 | 95.8 | 97.3 |
| | Differential pressure (kPa·s) | 158 | 170 | 178 | 200 | 230 | 250 | 270 | 300 |

[Table 3]

| <Gel Capture Performance> | | | | | |
|---|---|---|---|---|---|
| | Particle diameter (μm) | 0.51 | 0.6 | 0.71 | 0.83 |
| Example 1 | Collection efficiency (%) | 79.6 | 81.1 | 84.1 | 85.3 |
| Example 2 | Collection efficiency (%) | 82.5 | 83.4 | 86.3 | 89.4 |
| Example 3 | Collection efficiency (%) | 83.4 | 84.6 | 87.4 | 90.2 |
| Example 4 | Collection efficiency (%) | 84.6 | 85.3 | 88.0 | 91.0 |
| Example 5 | Collection efficiency (%) | 84.6 | 85.3 | 88.0 | 91.0 |
| Comparative Example 1 | Collection efficiency (%) | 39.5 | 44.4 | 52.2 | 61.2 |
| Comparative Example 2 | Collection efficiency (%) | 73.3 | 78.5 | 81.1 | 84.6 |
| Comparative Example 3 | Collection efficiency (%) | × | | | |
| Comparative Example 4 | Collection efficiency (%) | 68.9 | 73.6 | 78.6 | 80.6 |

From the above results, it was found that the depth filter of the present invention had very high collection efficiency and was stable even under high pressure. Furthermore, the depth filter showed high capture performance even for gels that are difficult to capture.

On the other hand, Comparative Example 1 did not have layers corresponding to the pre-filtration layer and the precision filtration layer, resulting in low collection efficiency.

Comparative Example 2 had high collection efficiency, but the collection efficiency dropped sharply under high pressure. The reason is considered to be that the filter itself had weak strength for not having a continuous fiber diameter gradient on the upstream side of the precision filtration layer, or that silica particles were pushed out by high pressure since silica was captured concentratedly in the precision filtration layer.

Comparative Example 3 attempted to wet the filter under high pressure, but water could not pass through at all. The reason is considered to be that the pore structure of the hydrophobic polyvinylidene fluoride copolymer resin was dense, preventing water passage. The fact that the depth filter does not get wet with water even under high pressure application is expected to make use in actual manufacturing processes difficult.

Comparative Example 4 had very high collection efficiency, but silica fine particles leaked out under high pressure. Such a phenomenon is a situation that should be avoided in semiconductor material polishing processes where filtration reliability is required.

In contrast, the depth filters of Examples 1 to 5 could stably maintain high collection efficiency even under high pressure, making the depth filters optimal for various filtration situations, particularly for processes where filtration reliability is emphasized, such as semiconductor polishing processes.

Furthermore, it was found that despite having high collection efficiency, the depth filters also excelled in water permeability, and therefore were filters with excellent handling characteristics for manufacturers.

Industrial Applicability

The depth filter of the present invention has filtration absoluteness and gel removal performance even for particles to be removed that have a reduced particle diameter, excels in liquid permeability, and excels in stability of capture performance under high pressure, making it suitable for CMP slurry manufacturing process applications, multilayer ceramic capacitor manufacturing process applications, and the like.

**Claims**

1.  A depth filter, comprising an outer layer, a pre-filtration layer, and a precision filtration layer arranged in this order with respect to a filtration direction, wherein

    the outer layer is a layer in which an outer layer nonwoven fabric comprising a high-melting-point resin and a low-melting-point resin is wound in multiple layers, and wound nonwoven fabrics are thermally bonded by the low-melting-point resin, and which is configured so that an average fiber diameter continuously decreases with respect to the filtration direction,
    the precision filtration layer is a layer in which a precision filtration layer nonwoven fabric is wound in multiple layers, and an average fiber diameter of fibers constituting the precision filtration layer nonwoven fabric is less than 300 nm, and
    the pre-filtration layer is a layer in which a pre-filtration layer nonwoven fabric is wound in multiple layers and which is configured so that an average fiber diameter is constant or decreases stepwise with respect to the filtration direction, and an average fiber diameter of fibers constituting the pre-filtration layer nonwoven fabric is 300 nm or more and less than 1000 nm.

2.  The depth filter according to claim 1, wherein the outer layer is a layer configured so that an average basis weight of the outer layer nonwoven fabric continuously decreases with respect to the filtration direction.

3.  The depth filter according to claim 1 or 2, wherein an average fiber diameter on a most upstream side of the outer layer is 5 $\mu$m to 50 $\mu$m, and an average fiber diameter ratio between the most upstream side and a most downstream side is 5 or more.

4.  The depth filter according to claim 1 or 2, wherein the pre-filtration layer comprises polypropylene having a melt flow rate of 500 g/10 min or more and a melting point of

5.  The depth filter according to claim 4, wherein the polypropylene is polypropylene polymerized by a metallocene catalyst.

6.  The depth filter according to claim 1 or 2, wherein fibers constituting the precision filtration layer nonwoven fabric are polyamide resin.

7.  The depth filter according to claim 1 or 2, wherein the precision filtration layer is a layer in which a laminate of at least one base material and the precision filtration layer nonwoven fabric is wound in multiple layers.

8.  The depth filter according to claim 7, wherein fibers constituting the base material and the precision filtration layer nonwoven fabric are polyamide resin.

## INTERNATIONAL SEARCH REPORT

| | International application No. |
|---|---|
| | **PCT/JP2024/000288** |

**A. CLASSIFICATION OF SUBJECT MATTER**

*B01D 39/16*(2006.01)i; *D01F 6/04*(2006.01)i; *D04H 1/728*(2012.01)i; *D04H 5/00*(2012.01)i
FI:   B01D39/16 A; B01D39/16 D; B01D39/16 E; D01F6/04 B; D04H1/728; D04H5/00

According to International Patent Classification (IPC) or to both national classification and IPC

**B. FIELDS SEARCHED**

Minimum documentation searched (classification system followed by classification symbols)

B01D39/16; D01F6/04; D04H1/728; D04H5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 7-82649 A (CHISSO CORPORATION) 28 March 1995 (1995-03-28) paragraphs [0027]-[0029] | 1-8 |
| Y | JP 2017-185422 A (JNC CORP.) 12 October 2017 (2017-10-12) paragraphs [0050]-[0056] | 1-8 |
| Y | JP 2008-75227 A (JAPAN VILENE CO., LTD.) 03 April 2008 (2008-04-03) paragraphs [0023]-[0025] | 4-5 |
| A | JP 11-156125 A (ROKI TECHNO CO., LTD.) 15 June 1999 (1999-06-15) entire text, all drawings | 1-8 |
| A | JP 2015-93259 A (DAIWABO HOLDINGS CO., LTD.) 18 May 2015 (2015-05-18) entire text, all drawings | 1-8 |

☐ Further documents are listed in the continuation of Box C.       ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **27 February 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/000288**

| Patent document cited in search report | | | Publication date (day/month/year) | Patent family member(s) | | | Publication date (day/month/year) |
|---|---|---|---|---|---|---|---|
| JP | 7-82649 | A | 28 March 1995 | US columns 12-13 EP | 6230901 634511 | B1 A1 | |
| JP | 2017-185422 | A | 12 October 2017 | (Family: none) | | | |
| JP | 2008-75227 | A | 03 April 2008 | (Family: none) | | | |
| JP | 11-156125 | A | 15 June 1999 | (Family: none) | | | |
| JP | 2015-93259 | A | 18 May 2015 | (Family: none) | | | |

Form PCT/ISA/210 (patent family annex) (July 2022)

**REFERENCES CITED IN THE DESCRIPTION**

**Patent documents cited in the description**

- WO 1998013123 A

- JP 2017185422 A